# EUROPEAN PATENT APPLICATION

(11) **EP 4 738 497 A1**
(43) Date of publication of application: **06.05.2026**
(21) Application number: 25189500.9
(22) Date of filing: 15.07.2025
(51) Int. Cl.: H01M 10/04, H01M 50/103, H01M 50/184, H01M 50/186, H01M 50/198, H01M 50/595

(54) **SECONDARY BATTERY**

(30) Priority: 31.10.2024 KR 20240151706
(71) Applicant: SAMSUNG SDI CO., LTD., Yongin-si, Gyeonggi-do 17084 (KR)
(72) Inventor: SONG, Ho Jin, 17084 Yongin-si, Gyeonggi-do (KR); LEE, Je Hyun, 17084 Yongin-si, Gyeonggi-do (KR); SONG, Jung Yeon, 17084 Yongin-si, Gyeonggi-do (KR)
(74) Representative: Bardehle Pagenberg Partnerschaft mbB Patentanwälte Rechtsanwälte

(57) **Abstract**

A secondary battery includes a case including a sealing area provided along a periphery of the case. An electrode assembly is accommodated in the case. An adhesive member is bonded to the case and the electrode assembly. At least a portion of the adhesive member is coupled to the sealing area.

## Description

### CROSS-REFERENCE TO THE RELATED APPLICATION

The present application claims priority to and the benefit of Korean Patent Application No. 10-2024-0151706, filed on October 31, 2024, in the Korean Intellectual Property Office, the entire disclosure of which is incorporated herein by reference.

### BACKGROUND

### 1. Field

The present disclosure relates to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

In accordance with the present disclosure a secondary battery as set forth in independent claim 1, is provided. Currently preferred embodiments are described in the dependent claims.

The present disclosure provides a secondary battery capable of preventing separation of an electrode assembly from a case (e.g., falling out of the electrode assembly from the case) during a battery manufacturing process and undesirable movement of the electrode assembly relative to the case after completion of the battery manufacturing process.

These and other aspects and features of the present disclosure will be described in or will be apparent from the following description of embodiments of the present disclosure.

According to aspects of the present disclosure, a secondary battery includes a case having a sealing area provided along the periphery of the case, an electrode assembly accommodated in the case, and an adhesive member bonded to the case and the electrode assembly. At least a portion of the adhesive member is coupled to the sealing area.

In one or more embodiments, the case may include a first case covering a first side of the electrode assembly and a second case covering a second side of the electrode assembly, and the sealing area may include a lateral sealing portion provided where the first and second cases are sealed to each other in an area corresponding to a lateral side of the electrode assembly and a front sealing portion provided where the first and second cases are sealed to each other in an area corresponding to a front side of the electrode assembly. The first side of the electrode assembly may be opposite the second side of the electrode assembly.

In one or more embodiments, at least a portion of the adhesive member may be coupled to the lateral sealing portion.

In one or more embodiments, at least a portion of the adhesive member may extend beyond the lateral side of the electrode assembly and may be coupled to the lateral sealing portion.

In one or more embodiments, the lateral sealing portion may include two lateral sealing portions that are opposite each other with respect to the electrode assembly, and the adhesive member may extend to the two lateral sealing portions.

In one or more embodiments, the lateral sealing portion may include two lateral sealing portions that are opposite each other with respect to the electrode assembly, and the adhesive member may extend to one of the two lateral sealing portions.

In one or more embodiments, the longitudinal width of the adhesive member may be equal to or less than the longitudinal width of the electrode assembly.

In one or more embodiments, the lateral width of a portion of the adhesive member coupled to the lateral sealing portion may be equal to or less than the lateral width of the lateral sealing portion.

In one or more embodiments, a portion of the adhesive member may be coupled to the front sealing portion.

In one or more embodiments, a portion of the adhesive member may extend beyond the front side of the electrode assembly and may be coupled to the front sealing portion.

In one or more embodiments, the adhesive member may extend from the center portion of the front side of the electrode assembly to the front sealing portion.

In one or more embodiments, the adhesive member may extend from two opposite side portions of the front side of the electrode assembly to the front sealing portion.

In one or more embodiments, the adhesive member may extend from the center and at least one side portion of the front side of the electrode assembly to the front sealing portion.

In one or more embodiments, the lateral width of a portion of the adhesive member coupled to the front sealing portion may be equal to or less than the lateral width of the front sealing portion.

In one or more embodiments, the electrode assembly may include a first substrate tab extending through the front side, a first cell tab welded to the first substrate tab, a second substrate tab extending through the front side, and a second cell tab welded to the second substrate tab, and the first cell tab and the second cell tab may extend through the front sealing portion to outside of the case.

In one or more embodiments, the adhesive member may be coupled to a portion of the front sealing portion that is spaced apart from the first cell tab and the second cell tab.

In one or more embodiments, a first insulating tape may be interposed between the first cell tab and the front sealing portion, a second insulating tape may be interposed between the second cell tab and the front sealing portion, and the adhesive member may be spaced apart from the first insulating tape and the second insulating tape.

In one or more embodiments, a first insulating tape may be interposed between the first cell tab and the front sealing portion, a second insulating tape may be interposed between the second cell tab and the front sealing portion, and the adhesive member may overlap the first insulating tape and the second insulating tape.

In one or more embodiments, the lateral sealing portion may include two lateral sealing portions opposite each other with respect to the electrode assembly, and the adhesive member may be coupled to the two lateral sealing portions and the front sealing portion.

In one or more embodiments, a first portion of the adhesive member may extend to outside the lateral side of the electrode assembly and be coupled to the lateral sealing portion, and a second portion of the adhesive member may extend to outside the front side of the electrode assembly and be coupled to the front sealing portion. For example, a first portion of the adhesive member may extend beyond the lateral side of the electrode assembly and be coupled to the lateral sealing portion, and a second portion of the adhesive member may extend beyond the front side of the electrode assembly and be coupled to the front sealing portion.

In one or more embodiments, the adhesive member may include cast polypropylene (CPP) and an adhesive.

In one or more embodiments, the second case may include a recess formed therein to accommodate the electrode assembly, a first portion of the adhesive member may be bonded to an upper side of the electrode assembly accommodated in the recess, and a second portion of the adhesive member may be coupled to the sealing area.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a plan view of a secondary battery according to an embodiment of the present disclosure;
FIG. 2 is an exploded perspective view of the secondary battery shown in FIG. 1;
FIG. 3 is a cross-sectional view taken along line 3-3 in FIG. 1;
FIG. 4 is a cross-sectional view taken along line 4-4 in FIG. 1;
FIG. 5 is a cross-sectional view taken along line 5-5 in FIG. 1;
FIGS. 6 to 11 are schematic views showing a method of manufacturing a secondary battery according to an embodiment of the present disclosure;
FIGS. 12 to 16 are schematic views showing a method of manufacturing a secondary battery according to an embodiment of the present disclosure;
FIGS. 17 to 27 are plan views showing the bonding positions of various adhesive members in a method of manufacturing a secondary battery according to an embodiment of the present disclosure;
FIGS. 28 and 29 are perspective views showing a battery pack including the exemplary cylindrical secondary battery according to the present disclosure; and
FIGS. 30 and 31 are perspective and side views showing a vehicle including an exemplary battery pack according to the present disclosure.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the present disclosure.

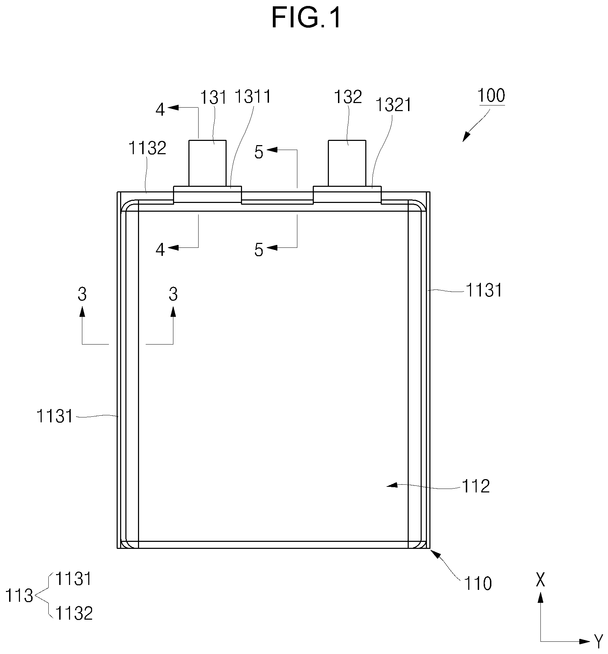

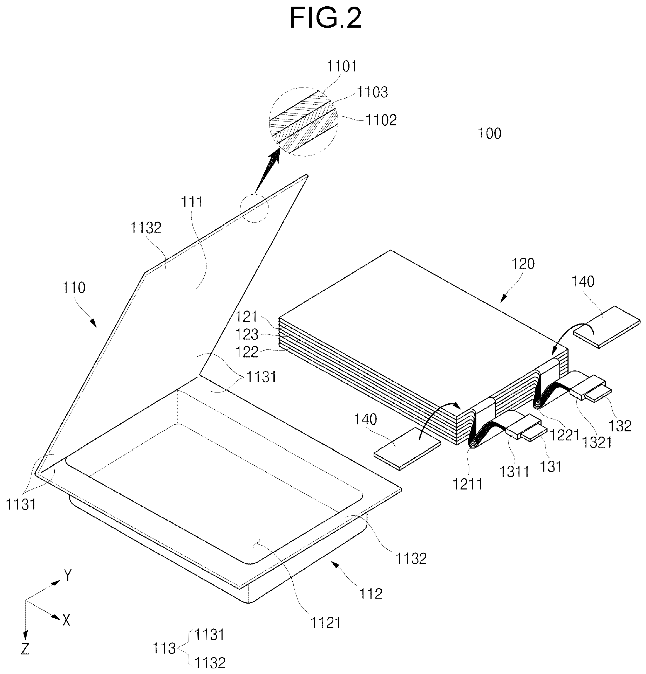

FIG. 1 is a plan view of a secondary battery 100 according to an embodiment of the present disclosure, and FIG. 2 is an exploded perspective view of the secondary battery 100 shown in FIG. 1. In the examples shown in FIGS. 1 and 2, the secondary battery 100 includes a case 110, an electrode assembly 120, a first electrode tab 131, a second electrode tab 132, and an adhesive member 140.

The case 110 may accommodate the electrode assembly 120 and may seal an area corresponding to the outer side of the electrode assembly 120. The case 110 may include or be referred to as a pouch, an exterior body, a can, or a housing. In one or more embodiments, the case 110 may be formed as a laminated structure including a first insulating layer 1101, a second insulating layer 1102, and a metal layer 1103 disposed between the first and second insulating layers 1101 and 1102. In one or more embodiments, the first insulating layer 1101 may include nylon or polyethylene terephthalate (PET), the metal layer 1103 may include an aluminum thin film, and the second insulating layer 1102 may include cast polypropylene (CPP). In other embodiments, various adhesive layers or functional layers may also be included, but the description of such additional layers will be omitted.

In one or more embodiments, the case 110 may include a first case 111 and a second case 112 that is connected at one of its sides to the first case 111. The second case 112 may include a recess 1121 having a depth to accommodate the electrode assembly 120. In one or more embodiments, the peripheral areas of the first and second cases 111 and 112 corresponding to the outer side of the electrode assembly 120 may be welded, e.g., thermally welded, to each other, whereby the electrode assembly 120 may be accommodated in the substantially pouch-type or pocket-type case 110. The areas (thermally) welded to each other may be the second insulating layers 1102 of the first and second cases 111 and 112.

The case 110 may be divided into the first case 111 and the second case 112 by bending a substantially middle portion of the rectangular plate-shaped integrated case 110 in the longitudinal direction of one side. The recess 1121 having a depth in which the electrode assembly 120 may be accommodated may be formed in the second case 112 through a pressing or drawing process. A sealing area 113 for sealing with the first case 111 may be formed along the outer periphery of the recess 1121. In one or more embodiments, the recess may also be formed in the first case 111. The sealing area 113 may be formed along three sides of each of the first and second cases 111 and 112, except for one side at which the first case 111 and the second case 112 are integrally connected to each other. The sealing area 113 may include a pair of lateral sealing portions 1131, which are provided by sealing the first and second cases 111 and 112 to each other at areas corresponding to the lateral sides of the electrode assembly 120 (e.g., areas outside the lateral sides of the electrode assembly 120), and a front sealing portion 1132, which is provided by sealing the first and second cases 111 and 112 to each other at an area corresponding to the front side of the electrode assembly 120 (e.g., an area outside the front side of the electrode assembly 120). FIG. 1 shows the pair of lateral sealing portions 1131 in a folded state, and FIG. 2 shows the pair of lateral sealing portions 1131 in a flat state before being folded. The lateral sealing portions 1131 may include or be referred to as wings or wing sealing areas. The front sealing portion 1132 may include or be referred to as a terrace or a terrace area.

In one or more embodiments, the case 110 may be made of stainless steel. In such an embodiment, sealing of stainless steel may be implemented using laser welding.

The electrode assembly 120 may be, for example, a wound type or a stacked type. The wound type may be provided in such that a first electrode plate 121, a second electrode plate 122, and a separator 123 disposed between the first and second electrode plates 121 and 122 are stacked one above another and then are wound in a substantially angular shape. The stacked type may be provided by repeatedly stacking first electrode plates 121, second electrode plates 122, and separators 123 between the first and second electrode plates 121 and 122 one above another. The stacked-type electrode assembly 120 may be provided such that one separator 123 is bent in a Z- or S-shape and the first electrode plates 121 and the second electrode plates 122 are alternately disposed between the bent areas of the separator 123. The separator 123 may include or be referred to as a separation membrane or an isolation membrane. In one or more embodiments, the separator 123 may include polyethylene, polypropylene, and a porous copolymer of polyethylene and polypropylene. The separator 123 may be provided such that the surface thereof is coated with a ceramic in order to have improved thermal performance. The electrode assembly 120 may include or be referred to as an electrode body, an electrode group, a jellyroll, a stack, or a Z-stack.

The width(s) of the separator 123 may be greater than the widths of the first electrode plates 121 and the second electrode plates 122 in order to prevent an electric short circuit between the first electrode plates 121 and the second electrode plates 122.

The first electrode plate 121 may include first active material layers or negative-electrode active material layers coated on both surfaces of a first current collector implemented as a conductive metal sheet, for example, a copper or nickel foil or mesh. The first electrode plate 121 may function as a negative electrode. The first current collector may further include a first substrate tab 1211, on which the first active material layer is not formed, with the first substrate tab 1211 extending outwardly by a predetermined length. The first substrate tab 1211 may be welded to the first electrode tab 131. In other embodiments, instead of the first substrate tab 1211, a separate first strip terminal may connect a first uncoated portion (e.g., an area not coated with the first active material layer) to the first electrode tab 131.

The second electrode plate 122 may include second active material layers or positive-electrode active material layers coated on both surfaces of a second current collector implemented as a highly conductive metal sheet, for example, an aluminum foil or mesh. The second electrode plate 122 may function as a positive electrode. The second current collector may further include a second substrate tab 1221 on which the second active material layer is not formed, with the second substrate tab 1221 extending outwardly by a predetermined length. The second substrate tab 1221 may be welded to the second electrode tab 132. In other embodiments, instead of the second substrate tab 1221, a separate second strip terminal may connect a second uncoated portion to the second electrode tab 132.

As described above, the first electrode tab 131 may be electrically connected to the first substrate tab 1211 of the electrode assembly 120. For example, the first electrode tab 131 may be connected to the first substrate tab 1211 by ultrasonic or laser welding. The second electrode tab 132 may be electrically connected to the second substrate tab 1221 of the electrode assembly 120. For example, the second electrode tab 132 may be connected to the second substrate tab 1221 by ultrasonic or laser welding.

In one or more embodiments, the first electrode tab 131 may pass through the case 110 to extend to outside of the case 110 by a predetermined length, with a first insulating tape 1311 interposed between first electrode tab 131 and the case 110. The second electrode tab 132 may pass through the case 110 to extend to outside of the case 110 by a predetermined length, with a second insulating tape 1321 interposed between the second electrode tab 132 and the case 110.

The first electrode tab 131 and the second electrode tab 132 may extend and protrude to outside of the case 110 through the front sealing portion 1132. Accordingly, the first insulating tape 1311 and the second insulating tape 1321 may also be coupled to the front sealing portion 1132. The first electrode tab 131 may be made of copper or nickel, and the second electrode tab 132 may be made of aluminum. Each of the electrode tabs may include or be referred to as a lead, a lead tab, or a cell tab.

The adhesive member 140 may bond or couple the case 110 and the electrode assembly 120 to each other. In one or more embodiments, a portion of the adhesive member 140 may be bonded or coupled to the sealing area 113 and another portion of the adhesive member 140 may be bonded to the electrode assembly 120. The adhesive member 140 may be formed in a substantially quadrangular (e.g., rectangular or square) plate shape. The adhesive member 140 may include or be referred to as an adhesive tape, an adhesive film, or an adhesive.

A portion of the adhesive member 140 may be bonded to an upper side of the electrode assembly 120 (e.g., upper sides of the lateral sides of the electrode assembly 120), and another portion of the adhesive member 140 may be bonded or coupled to the lateral sealing portions 1131. In particular embodiments, a portion of the adhesive member 140 may be bonded to an upper side of the electrode assembly 120 (e.g., an upper side of the front side of the electrode assembly 120), and another portion of the adhesive member 140 may be bonded or coupled to the front sealing portion 1132.

The adhesive member 140 may include a substrate made of, for example, polypropylene, polyethylene, or cast polypropylene (CPP), and an adhesive coated on the substrate. CPP may be desirable because the adhesive member 140 coupled to the sealing portion (e.g., the lateral sealing portions 1131 and the front sealing portion 1132) needs to be melted at high temperature and then cured at low temperature.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b}-_{c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2);

LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt% to about 99 wt% of a negative electrode active material, about 0.5 wt% to about 5 wt% of a binder, and about 0 wt% to about 5 wt% of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metalcoated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an esterbased, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

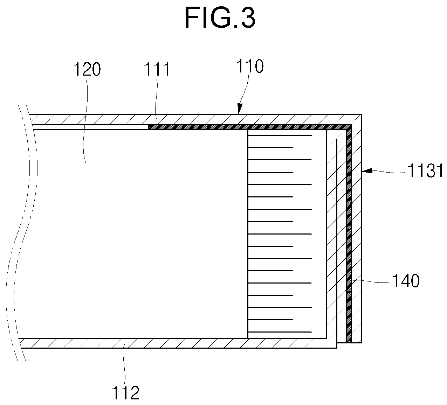

FIG. 3 is a cross-sectional view taken along line 3-3 in FIG. 1. Here, FIG. 3 is a flipped view of FIG. 1. As shown in FIG. 3, a portion of the adhesive member 140 may be bonded to an upper side of the electrode assembly 120 (e.g., upper sides of the lateral sides of the electrode assembly 120), and another portion of the adhesive member 140 may be bonded or coupled to the lateral sealing portions 1131. As described above, the lateral sealing portions 1131 may be such that the second insulating layer 1102 of the first case 111 and the second insulating layer 1102 of the second case 112 are thermally welded to each other and then cured. A portion of the adhesive member 140 may be coupled between the first case 111 and the second case 112 and then thermally welded and cured together with the first and second cases 111 and 112. In other words, a portion of the adhesive member 140 may be bonded to an upper side of the electrode assembly 120, and another portion of the adhesive member 140 may extend outside the lateral sides of the electrode assembly 120 to be coupled to the lateral sealing portions 1131. The width or length of the adhesive member 140 coupled to the lateral sealing portions 1131 may be equal to the width or length of the lateral sealing portions 1131. In other embodiments, the width or length of the adhesive member 140 coupled to the lateral sealing portions 1131 may be less than the width or length of the lateral sealing portions 1131. As shown in FIG. 3, the lateral sealing portions 1131 to which the adhesive member 140 is coupled may be bent toward the sidewalls of the second case 112. In one or more embodiments, the adhesive member 140 extending from the electrode assembly 120 to the lateral sealing portions 1131 may be referred to as a lateral adhesive member.

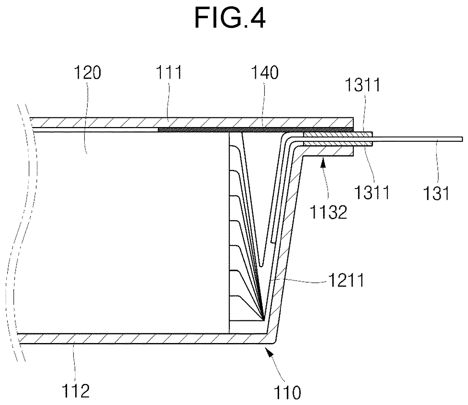

FIG. 4 is a cross-sectional view taken along line 4-4 in FIG. 1. Here, FIG. 4 is a flipped view of FIG. 1. Further, FIG. 4 shows an area where the first electrode tab 131 and the first insulating tape 1311 overlap. As shown in FIG. 4, a portion of the adhesive member 140 may be bonded to an upper side of the electrode assembly 120 (e.g., an upper side of the front side of the electrode assembly 120), and another portion of the adhesive member 140 may be bonded or coupled to the front sealing portion 1132. As described above, the front sealing portion 1132 may be provided such that the second insulating layer 1102 of the first case 111 and the second insulating layer 1102 of the second case 112 are thermally welded to each other and then cured, and a portion of the adhesive member 140 may be coupled between the first case 111 and the second case 112 and then thermally welded and cured together with the first and second cases 111 and 112. In other words, a portion of the adhesive member 140 may be bonded to an upper side of the electrode assembly 120, and another portion of the adhesive member 140 may extend beyond the front side of the electrode assembly 120 and be coupled to the front sealing portion 1132. In more detail, an upper side of a portion of the adhesive member 140 may be bonded to the front sealing portion 1132 provided at the first case 111, and a lower side of the portion of the adhesive member 140 may be bonded to the first insulating tape 1131. The width or length of the adhesive member 140 coupled to the front sealing portion 1132 may be equal to the width or length of the front sealing portion 1132. The width or length of the adhesive member 140 coupled to the front sealing portion 1132 may be less than the width or length of the front sealing portion 1132. As shown in FIG. 4, the front sealing portion 1132 to which the adhesive member 140 is coupled may extend in a substantially horizontal direction from the sidewalls of the second case 112. The adhesive member 140 extending from the electrode assembly 120 to the front sealing portion 1132 may be referred to as a front adhesive member.

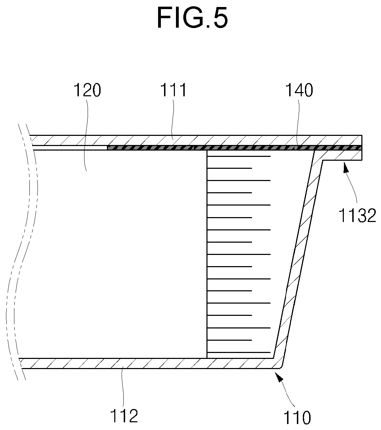

FIG. 5 is a cross-sectional view taken along line 5-5 in FIG. 1. Here, FIG. 5 is a flipped view of FIG. 1. Further, FIG. 5 shows an area where the first and second electrode tabs 131 and 132 and the first and second insulating tapes 1311 and 1321 do not overlap. As shown in FIG. 5, a portion of the adhesive member 140 may be bonded to an upper side of the electrode assembly 120 (e.g., an upper side of the front side of the electrode assembly 120), and another portion of the adhesive member 140 may be bonded or coupled to the front sealing portion 1132. The front sealing portion 1132 may be provided such that the second insulating layer 1102 of the first case 111 and the second insulating layer 1102 of the second case 112 are thermally welded to each other and then cured, and a portion of the adhesive member 140 may be coupled between the first case 111 and the second case 112 and then thermally welded and cured together with the first and second cases 111 and 112. In other words, a portion of the adhesive member 140 may be bonded to an upper side of the electrode assembly 120, and another portion of the adhesive member 140 may extend beyond the front side of the electrode assembly 120 to be coupled to the front sealing portion 1132. The width or length of the adhesive member 140 coupled to the front sealing portion 1132 may be equal to the width or length of the front sealing portion 1132. In other embodiments, the width or length of the adhesive member 140 coupled to the front sealing portion 1132 may be less than the width or length of the front sealing portion 1132.

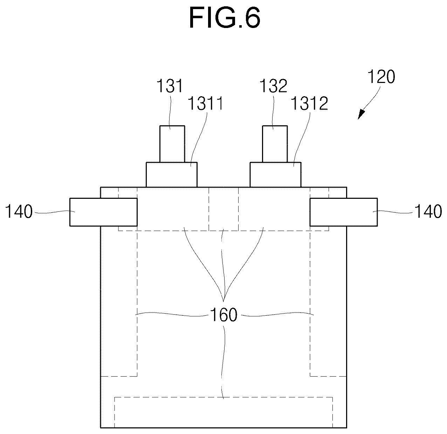

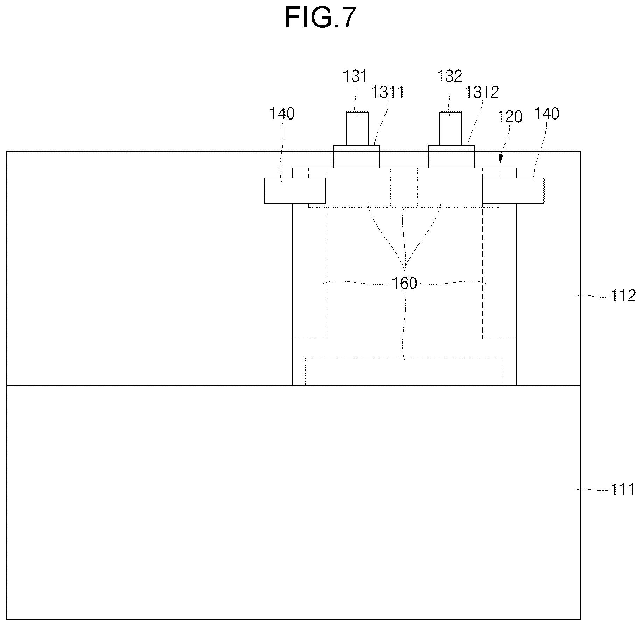

FIGS. 6 to 11 are schematic views showing a method of manufacturing the secondary battery 100 according to an embodiment of the present disclosure. As shown in FIGS. 6 and 7, the electrode assembly 120 may be positioned in the recess 1121 formed in the second case 112 of the case 110. In such an embodiment, a portion of the adhesive member 140 may be bonded to an upper side of the electrode assembly 120 (e.g., upper sides of the lateral sides of the electrode assembly 120), and another portion of the adhesive member 140 may be bonded to the lateral sealing portions 1131. In some examples, two adhesive members 140 may be provided, and each of the adhesive members 140 may extend to one of the two lateral sealing portions 1131 that are opposite each other with respect to the electrode assembly 120. The longitudinal widths of the adhesive members 140 may be equal to or less than the longitudinal width of the electrode assembly 120.

As shown in FIG. 6, if the electrode assembly 120 is a stacked type, the electrode assembly 120 may be finished with a plurality of insulating tapes 160 so that the appearance of the completely manufactured electrode assembly 120 is not changed.

As shown in FIG. 7, during the battery manufacturing process, the case 110 may be in a state where the first case 111 and the second case 112 are unfolded, and the recess 1121 for accommodating the electrode assembly 120 may be formed in the second case 112. Further, a portion of the second case 112 that is located beside the electrode assembly 120 (e.g., left areas of the first and second cases 111 and 112 in FIG. 7) may be used as a chamber for discharging gas during the manufacturing process. The areas of the first and second cases 111 and 112 that are used as the chamber may be broader than the sealing area 113.

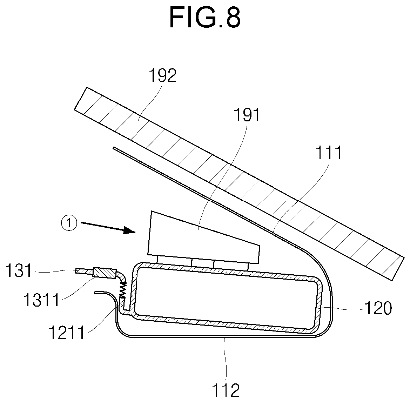

As shown in FIG. 8, an adsorption tool 191 may use a vacuum to hold the electrode assembly 120 and may feed the electrode assembly 120 into the recess 1121 formed in the second case 112. A pressing tool 192 may press the first case 111 toward the second case 112.

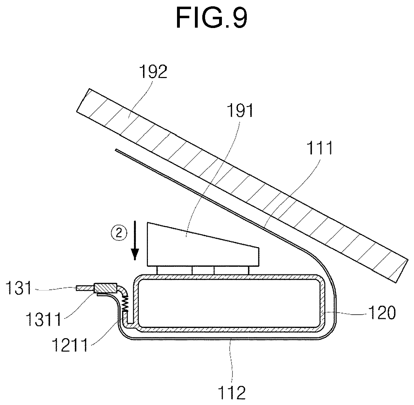

In some embodiments, as shown in FIG. 9, in the state in which the adsorption tool 191 presses the electrode assembly 120 to the recess 1121 in the second case 112, the above-described adhesive member 140 may be bonded to the electrode assembly 120 and the lateral sealing portions 1131 of the second case 112 (and/or the front sealing portion 1132).

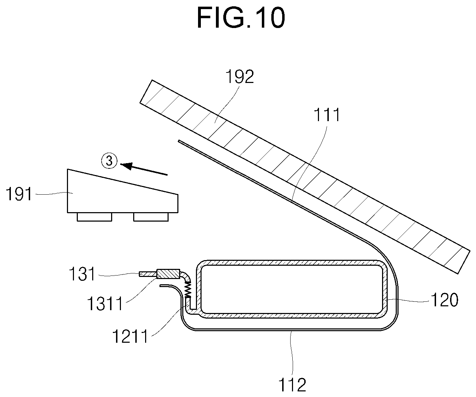

As shown in FIG. 10, the adsorption tool 191 may be separated from the electrode assembly 120 and may be removed from the first and second cases 111 and 112. In such an embodiment, because the adhesive member 140 is already bonded between an upper side of the electrode assembly 120 and the second case 112, the electrode assembly 120 does not move out of the recess 1121 in the second case 112.

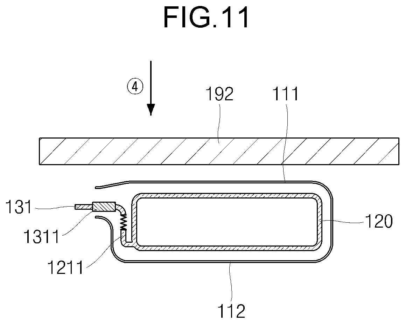

As shown in FIG. 11, the pressing tool 192 may completely press the first case 111 toward the second case 112, and then a thermal welding process may be performed.

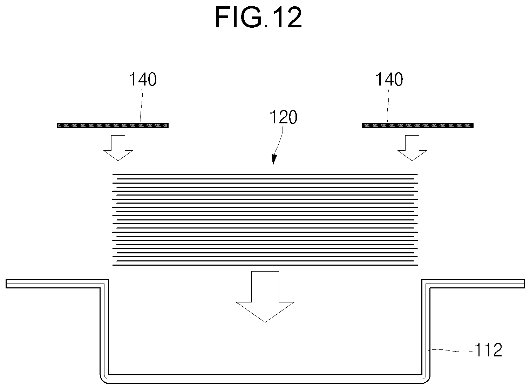

FIGs. 12 to 16 are schematic views showing a method of manufacturing the secondary battery 100 according to an embodiment of the present disclosure. As shown in FIG. 12, the electrode assembly 120 may be accommodated in the recess 1121 in the second case 112, and then the adhesive member 140 may be provided.

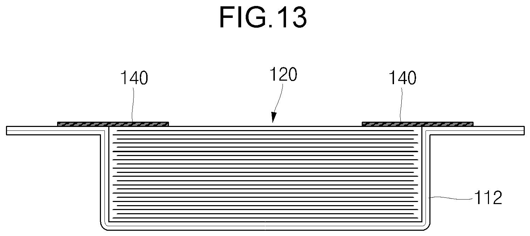

As shown in FIG. 13, after the electrode assembly 120 is accommodated in the recess 1121 in the second case 112, a portion of the adhesive member 140 may be bonded to an upper side of the electrode assembly 120, and another portion of the adhesive member 140 may be bonded to an upper side of the second case 112 (e.g., the lateral sealing portions 1131). Accordingly, the electrode assembly 120 may not move out of the recess 1121 in the second case 112. In some embodiments, the adhesive member 140 may cover the entirety or part of the lateral sealing portions 1131.

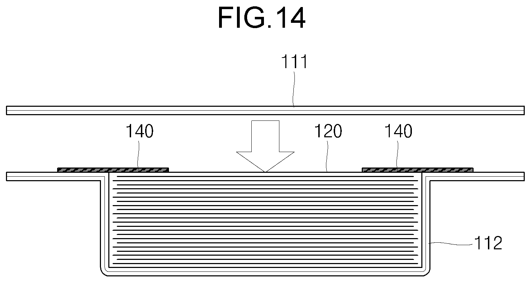

As shown in FIG. 14, the first case 111 may be folded by the pressing tool 192 to completely cover the second case 112. In such an embodiment, the lateral sealing portions 1131 of the first and second cases 111 and 112 move into contact with each other. A portion of the adhesive member 140 may be fitted between the lateral sealing portions 1131 of the first and second cases 111 and 112. The second insulating layers 1102 of the first and second cases 111 and 112 that face each other may be formed from CPP, and the adhesive member 140 may also be formed from CPP.

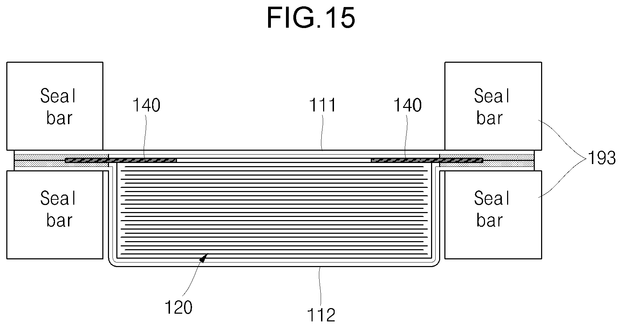

As shown in FIG. 15, the lateral sealing portions 1131 of the first and second cases 111 and 112 may be pressed between an upper seal bar 193 and a lower seal bar 193. Accordingly, the lateral sealing portions 1131 of the first and second cases 111 and 112 (e.g., the second insulating layers 1102) may melt. In such an embodiment, the portion of the adhesive member 140 fitted between the lateral sealing portions 1131 of the first and second cases 111 and 112 may melt. Thereafter, the upper seal bar 193 and the lower seal bar 193 may be removed from the lateral sealing portions 1131 of the first and second cases 111 and 112, and the lateral sealing portions 1131 may be cooled. Then, the lateral sealing portions 1131 of the first and second cases 111 and 112 may be cured. Thus, the adhesive member 140 may be completely coupled to the lateral sealing portions 1131.

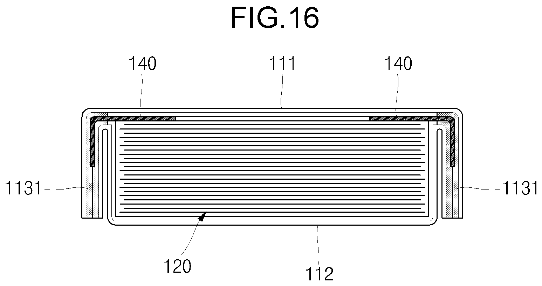

As shown in FIG. 16, in some embodiments, the lateral sealing portions 1131 may be folded. In particular, the lateral sealing portions 1131 may be folded toward the sidewalls of the second case 112. Such a configuration minimizes the external size of the battery.

This manufacturing process may be similarly applied to the front sealing portion 1132. For example, the adhesive member 140 may be bonded to an upper side of the electrode assembly 120 (e.g., an upper side of the front side of the electrode assembly 120) and the front sealing portion 1132 provided at the second case 112. As described above, the first case 111 may cover the second case 112, and thereafter, a sealing process may be performed on the front sealing portion 1132 by the upper seal bar 193 and the lower seal bar 193.

With the configurations and methods according to the present disclosure, it is possible to prevent separation of the electrode assembly 120 from the case 110 (e.g., the electrode assembly 120 moving out of the case 110) by virtue of the provision of the adhesive member 140 during the battery manufacturing process. Further, according to the present disclosure, it is possible to prevent undesirable movement of the electrode assembly 120 in the case 110 by virtue of the provisions of the adhesive member 140 after completion of the battery manufacturing process.

Hereinafter, various bonding positions and forms of adhesive members 141 to 150 will be described.

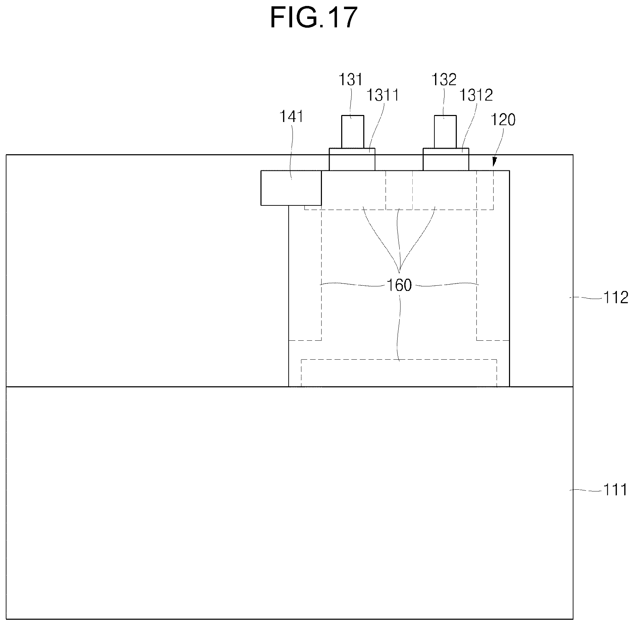

FIGS. 17 to 27 are plan views showing the bonding positions of various adhesive members 141 to 150 in methods of manufacturing secondary batteries 100 according to embodiments of the present disclosure. Here, the reference numerals in FIGS. 17 to 27 refer to the same elements as in FIGS. 1 to 16.

As shown in FIG. 17, the adhesive member 141 may be bonded to the left lateral sealing portion 1131 of the two lateral sealing portions 1131 that are opposite each other with respect to the electrode assembly 120 and to a left portion of the front sealing portion 1132. In particular embodiments, a portion of the adhesive member 141 may be bonded to an upper side of the left lateral side of the electrode assembly 120, an upper side of a left portion of the front side of the electrode assembly 120, the left lateral sealing portion 1131, and a left portion of the front sealing portion 1132. The lateral width of the adhesive member 141 may be greater than the longitudinal width of the adhesive member 142. The adhesive member 141 may be spaced apart from or overlap the first electrode tab 131 and the first insulating tape 1311.

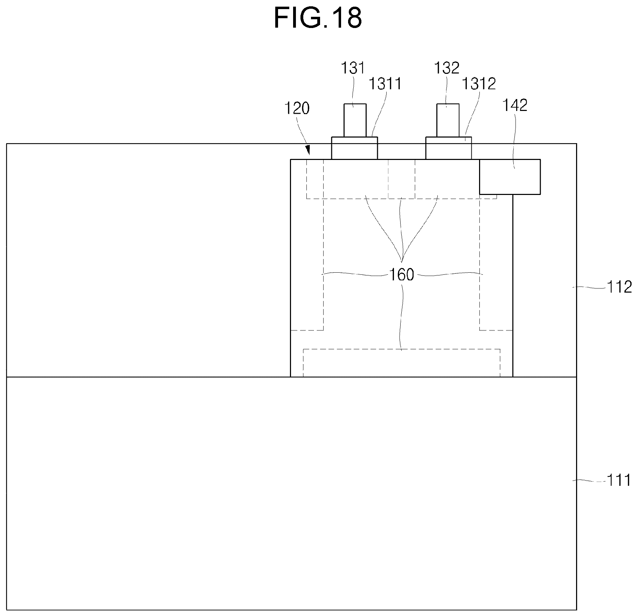

As shown in FIG. 18, the adhesive member 142 may be bonded to the right lateral sealing portion 1131 of the two lateral sealing portions 1131 that are opposite each other with respect to the electrode assembly 120 and to a right portion of the front sealing portion 1132. In particular embodiments, a portion of the adhesive member 142 may be bonded to an upper side of the right lateral side of the electrode assembly 120, an upper side of a right portion of the front side of the electrode assembly 120, the right lateral sealing portion 1131, and a right portion of the front sealing portion 1132. The lateral width of the adhesive member 142 may be greater than the longitudinal width of the adhesive member 142. The adhesive member 142 may be spaced apart from or overlap the second electrode tab 132 and the second insulating tape 1321.

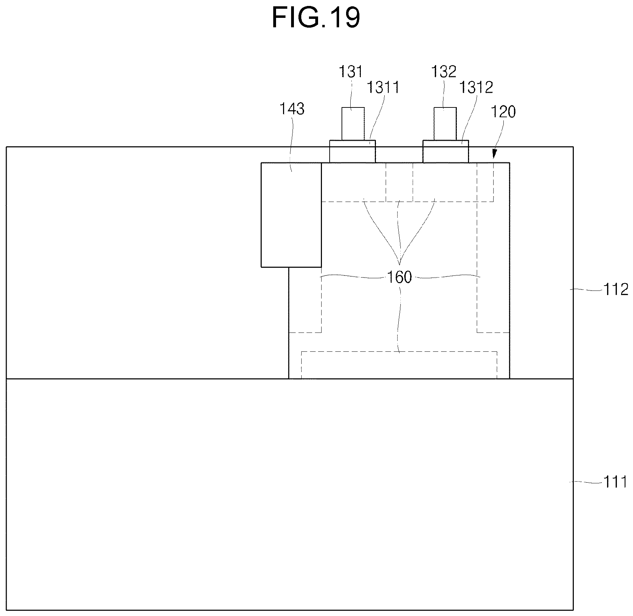

As shown in FIG. 19, the adhesive member 143 may extend to and be bonded to the left lateral sealing portion 1131 of the two lateral sealing portions 1131 that are opposite each other with respect to the electrode assembly 120. In particular embodiments, a portion of the adhesive member 143 may be bonded to an upper side of the left lateral side of the electrode assembly 120 and the left lateral sealing portion 1131. The lateral width of the adhesive member 143 may be less than the longitudinal width of the adhesive member 143. The adhesive member 143 may be spaced apart from the first electrode tab 131 and the first insulating tape 1311.

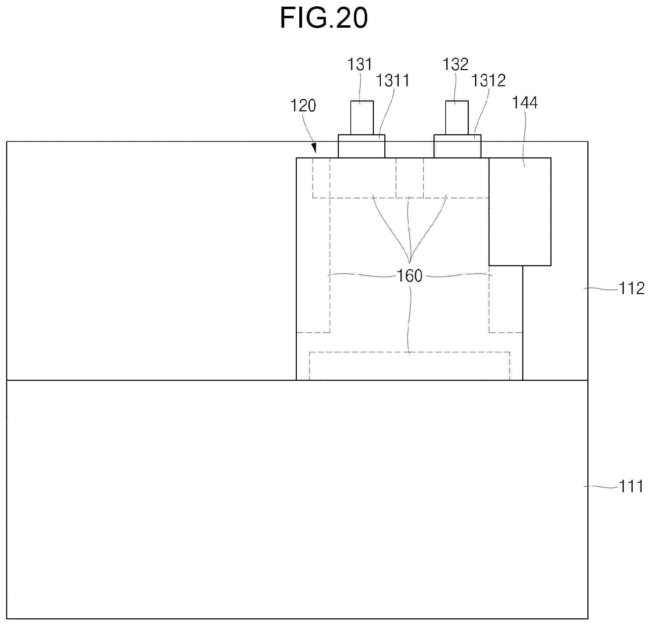

As shown in FIG. 20, the adhesive member 144 may extend to and be bonded to the right lateral sealing portion 1131 of the two lateral sealing portions 1131 that are opposite each other with respect to the electrode assembly 120. In particular embodiments, a portion of the adhesive member 144 may be bonded to an upper side of the right lateral side of the electrode assembly 120 and the right lateral sealing portion 1131. The lateral width of the adhesive member 144 may be less than the longitudinal width of the adhesive member 144. The adhesive member 144 may be spaced apart from the second electrode tab 132 and the second insulating tape 1321.

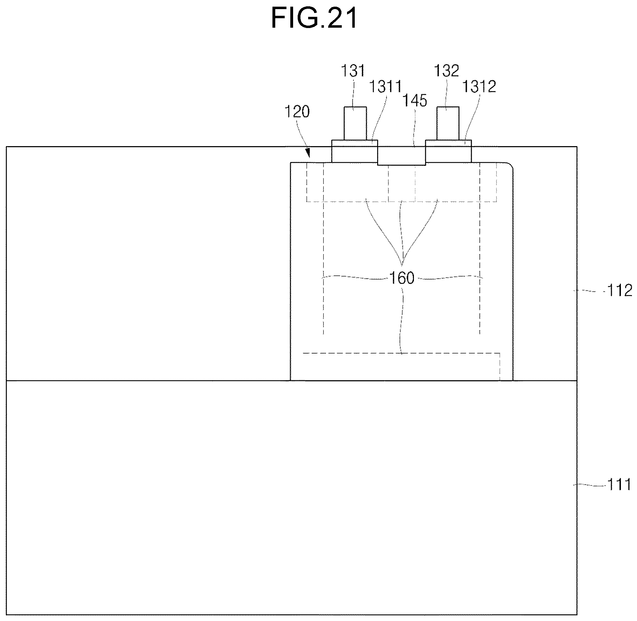

As shown in FIG. 21, the adhesive member 145 may extend from the center of the front side of the electrode assembly 120 to the front sealing portion 1132 and may be bonded to the front sealing portion 1132. A first portion of the adhesive member 145 may be bonded to an upper side of the front side of the electrode assembly 120, and a second portion of the adhesive member 145 may be bonded to the front sealing portion 1132. In some embodiments, the adhesive member 145 may not overlap the first and second electrode tabs 131 and 132 and/or the first and second insulating tapes 1311 and 1321, with the adhesive member 145 being spaced apart from the tabs 131 and 132 and the tapes 1311 and 1321. In other embodiments, a portion of the adhesive member 145 may overlap the first and second electrode tabs 131 and 132 and/or the first and second insulating tapes 1311 and 1321.

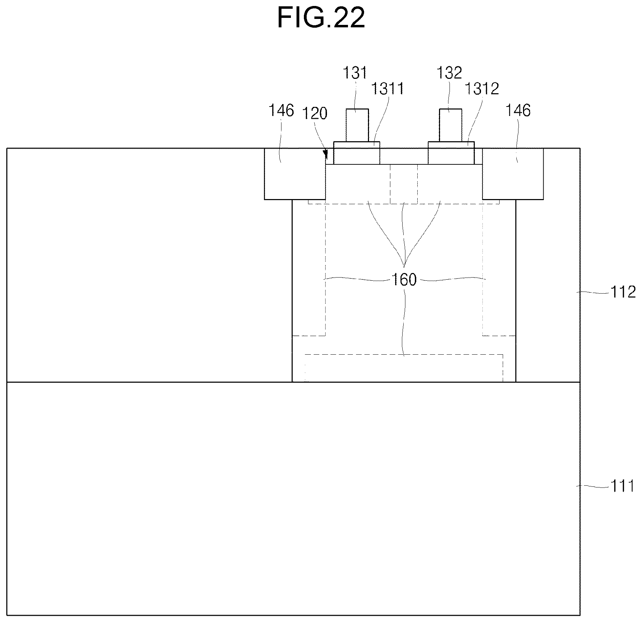

As shown in FIG. 22, adhesive members 146 may be provided in symmetrical areas of the electrode assembly 120. In particular, a pair of adhesive members 146 may extend from upper sides of two opposite side portions of the front side of the electrode assembly 120 to the front sealing portion 1132 and may be bonded to the front sealing portion 1132. A first portion of the left adhesive member 146 may be bonded to an upper side of a left portion of the front side of the electrode assembly 120, and a second portion of the left adhesive member 146 may be bonded to a left portion of the front sealing portion 1132. A first portion of the right adhesive member 146 may be bonded to an upper side of a right portion of the front side of the electrode assembly 120, and a second portion of the right adhesive member 146 may be bonded to a right portion of the front sealing portion 1132. In some embodiments, the pair of adhesive members 146 may not overlap the first and second electrode tabs 131 and 132 and/or the first and second insulating tapes 1311 and 1321, with the adhesive members 146 being spaced apart from the tabs 131 and 132 and the tapes 1311 and 1321. In other embodiments, portions of the pair of adhesive members 146 may overlap the first and second electrode tabs 131 and 132 and/or the first and second insulating tapes 1311 and 1321.

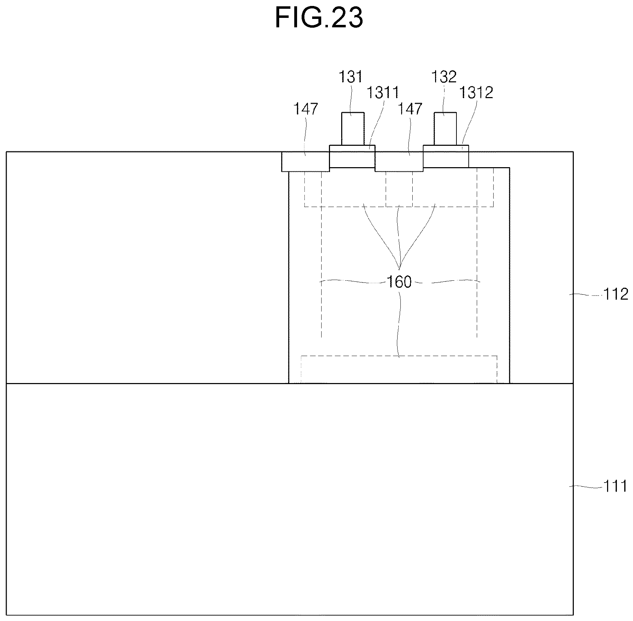

As shown in FIG. 23, adhesive members 147 may be in asymmetrical areas of the electrode assembly 120. In particular, one of the adhesive members 147 may extend from an upper side of a left portion of the front side of the electrode assembly 120 to a left portion of the front sealing portion 1132 and may be bonded to the left portion of the front sealing portion 1132. In such an embodiment, the other of the adhesive members 147 may extend from an upper side of a center portion of the front side of the electrode assembly 120 to a center portion of the front sealing portion 1132 and may be bonded to the center portion of the front sealing portion 1132.

A first portion of the left adhesive member 147 may be bonded to an upper side of a left portion of the front side of the electrode assembly 120, and a second portion of the left adhesive member 147 may be bonded to a left portion of the front sealing portion 1132. A first portion of the center adhesive member 147 may be bonded to an upper side of a center portion of the front side of the electrode assembly 120, and a second portion of the center adhesive member 147 may be bonded to a center portion of the front sealing portion 1132. The adhesive members 147 may not overlap the first and second electrode tabs 131 and 132 and/or the first and second insulating tapes 1311 and 1321, with the adhesive members 147 being spaced apart from the tabs 131 and 132 and the tapes 1311 and 1321. In other embodiments, portions of the pair of adhesive members 147 may overlap the first and second electrode tabs 131 and 132 and/or the first and second insulating tapes 1311 and 1321.

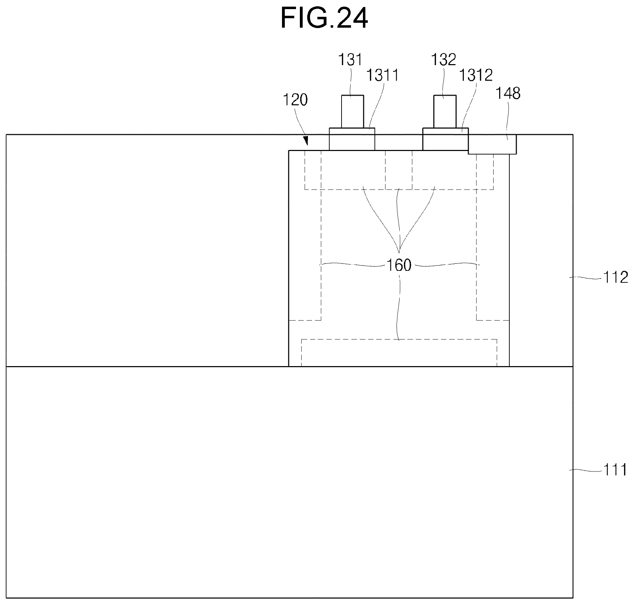

As shown in FIG. 24, the adhesive member 148 may extend from a right portion of the front side of the electrode assembly 120 to a right portion of the front sealing portion 1132 and may be bonded to the right portion of the front sealing portion 1132. A first portion of the right adhesive member 148 may be bonded to an upper side of a right portion of the front side of the electrode assembly 120, and a second portion of the right adhesive member 148 may be bonded to a right portion of the front sealing portion 1132. In some embodiments, the adhesive member 148 may not overlap the second electrode tab 132 and/or the second insulating tape 1321, with the adhesive member being spaced from the tab 132 and the tape 1321. In other embodiments, a portion of the adhesive member 148 may overlap the second electrode tab 132 and/or the second insulating tape 1321.

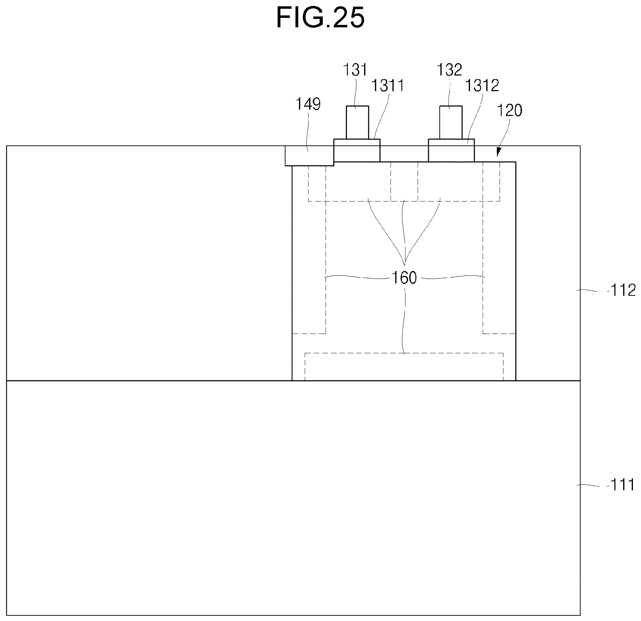

As shown in FIG. 25, the adhesive member 149 may extend from a left portion of the front side of the electrode assembly 120 to a left portion of the front sealing portion 1132 and may be bonded to the left portion of the front sealing portion 1132. A first portion of the left adhesive member 149 may be bonded to an upper side of a left portion of the front side of the electrode assembly 120, and a second portion of the left adhesive member 149 may be bonded to a left portion of the front sealing portion 1132. In some embodiments, the adhesive member 149 may not overlap the first electrode tab 131 and/or the first insulating tape 1311, with the adhesive member 149 being spaced apart from the tab 131 and the tape 1311. In other embodiments, a portion of the adhesive member 149 may overlap the first electrode tab 131 and/or the first insulating tape 1311.

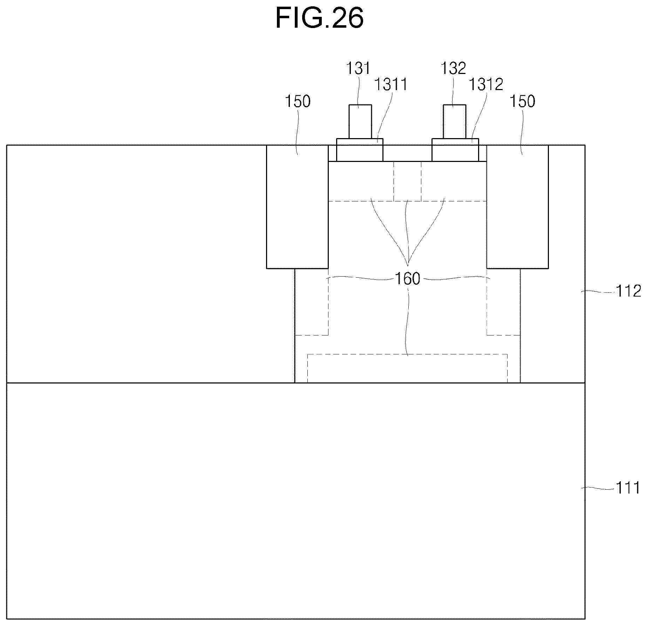

As shown in FIG. 26, adhesive members 150 may be provided in symmetrical areas of the electrode assembly 120 so as to be spaced apart from each other. A portion of the left adhesive member 150 may be bonded to an upper side of the left lateral side of the electrode assembly 120, an upper side of a left portion of the front side of the electrode assembly 120, the left lateral sealing portion 1131, and a left portion of the front sealing portion 1132. A portion of the right adhesive member 150 may be bonded to an upper side of the right lateral side of the electrode assembly 120, an upper side of a right portion of the front side of the electrode assembly 120, the right lateral sealing portion 1131, and a right portion of the front sealing portion 1132. The adhesive members 150 may be spaced apart from the first and second electrode tabs 131 and 132 and the first and second insulating tapes 1311 and 1321. In some embodiments, portions of the pair of adhesive members 150 may overlap the first and second electrode tabs 131 and 132 and the first and second insulating tapes 1311 and 1321. And in some embodiments, the longitudinal widths of the adhesive members 150 may be greater than the lateral widths of the adhesive members.

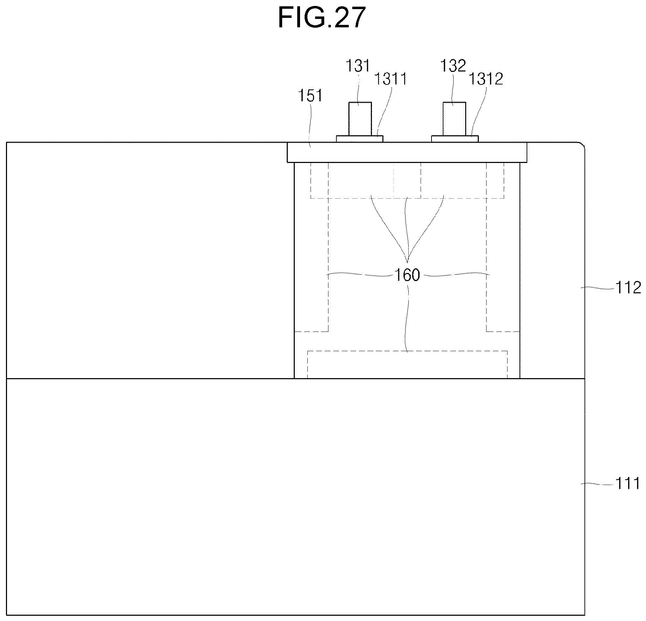

As shown in FIG. 27, the adhesive member 151 may extend from the front side of the electrode assembly 120 to the front sealing portion 1132 and may be bonded to the front sealing portion 1132. A first portion of the adhesive member 151 may be bonded to an upper side of the front side of the electrode assembly 120, and a second portion of the adhesive member 151 may be bonded to the front sealing portion 1132. In some embodiments, at least a portion of the adhesive member 151 may overlap the first and second electrode tabs 131 and 132 and the first and second insulating tapes 1311 and 1321. And in some embodiments, the lateral width of the adhesive member 151 may be greater than the longitudinal width of the adhesive member 151.

In embodiments of the present disclosure, at least a portion of the adhesive member 140 to 151 may be bonded and/or coupled to the lateral sealing portions 1131. At least a portion of the adhesive member 140 to 151 may be bonded to an upper side of the electrode assembly 120, and another portion of the adhesive member 140 to 151 may extend outside the lateral sides of the electrode assembly 120 and may be bonded and/or coupled to the lateral sealing portions 1131. The adhesive member 140 to 151 may extend to the two lateral sealing portions 1131 that are opposite each other with respect to the electrode assembly 120. The adhesive member 140 to 151 may extend to any one of the two lateral sealing portions 1131 that are opposite each other with respect to the electrode assembly 120. The longitudinal width of the adhesive member 140 to 151 may be equal to or less than the longitudinal width of the electrode assembly 120. The lateral width of the portion of the adhesive member 140 to 151 that is coupled to the lateral sealing portions 1131 may be equal to or less than the lateral width of the lateral sealing portions 1131. At least a portion of the adhesive member 140 to 151 may be coupled to the front sealing portion 1132. At least a portion of the adhesive member 140 to 151 may be bonded to an upper side of the electrode assembly 120, and at least another portion of the adhesive member 140 to 151 may extend beyond the front side of the electrode assembly 120 and may be bonded and/or coupled to the front sealing portion 1132. The adhesive member 140 to 151 may extend from a center portion of the front side of the electrode assembly 120 to the front sealing portion 1132. The adhesive member 140 to 151 may extend from two opposite side portions of the front side of the electrode assembly 120 to the front sealing portion 1132 The adhesive member 140 to 151 may extend from the center and at least one side portion of the front side of the electrode assembly 120 to the front sealing portion 1132The lateral width of the portion of the adhesive member 140 to 151 that is coupled to the front sealing portion 1132 may be equal to or less than the lateral width of the front sealing portion 1132. The adhesive member 140 to 151 may be coupled to a portion of the front sealing portion 1132 spaced apart from the first electrode tab 131 and the second electrode tab 132. The adhesive member 140 to 151 may be coupled to the two lateral sealing portions 1131 that are opposite each other with respect to the electrode assembly 120 and to the front sealing portion 1132. A portion of the adhesive member 140 to 151 may extend beyond the lateral sides of the electrode assembly 120 and may be coupled to the lateral sealing portions 1131, and another portion of the adhesive member 140 to 151 may extend beyond the front side of the electrode assembly 120 and may be coupled to the front sealing portion 1132.

Because the adhesive member 140 to 151 is bonded to the electrode assembly 120 and the sealing portion during the battery manufacturing process, separation of the electrode assembly 120 from the case 110 (e.g., the electrode assembly 120 falling out of the case 110) may be prevented. Further, because the adhesive member 140 to 151 is maintained in a state of being coupled to the electrode assembly 120 and the sealing portion after completion of the battery manufacturing process, undesirable movement of the electrode assembly 120 relative to the case 110 may be prevented.

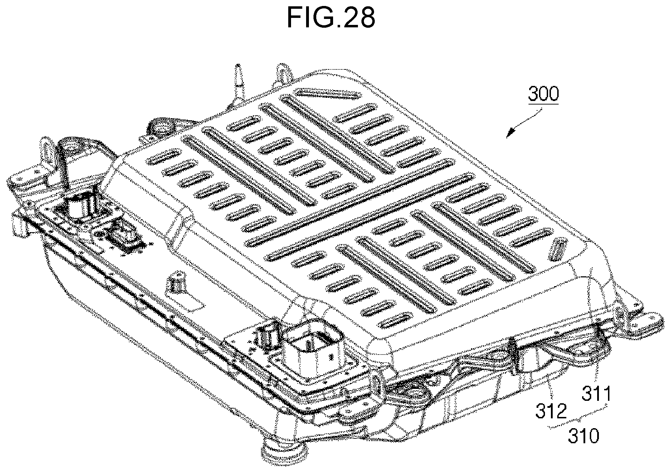

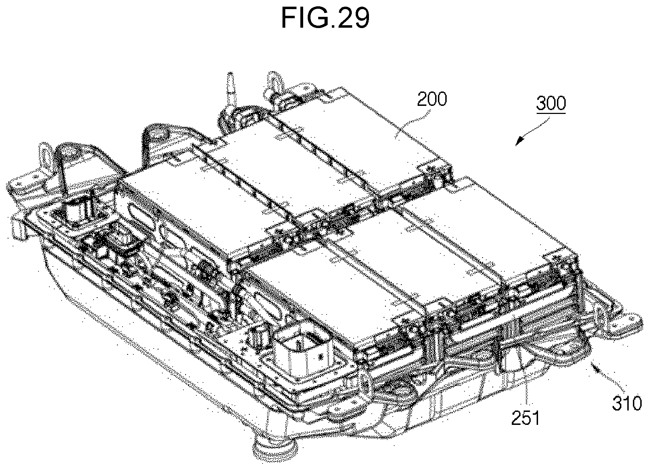

FIGS. 28 and 29 are perspective views showing a battery pack 300 including the exemplary cylindrical secondary battery according to the present disclosure. Referring to FIGS. 28 and 29, the battery pack 300 may include a plurality of battery modules 200 and a housing 310 for accommodating the plurality of battery modules 200. For example, the housing 310 may include first and second housings 311 and 312 coupled in opposite directions through the plurality of battery modules 200. The plurality of battery modules 200 may be electrically connected to each other by using a bus bar 251, and the plurality of battery modules 200 may be electrically connected to each other in a series/parallel or series-parallel mixed method, thereby obtaining desired (e.g., required) electrical output. In FIGs. 28 and 29, for convenience of illustration, parts such as bus bars, cooling units, and external terminals for electrical connection of battery cells are omitted. In one or more embodiments, battery pack 300 may be mounted in a vehicle. The vehicle may be, for example, an electric vehicle, a hybrid vehicle, or a plug-in hybrid vehicle. The vehicle may include a fourwheeled vehicle or a two-wheeled vehicle.

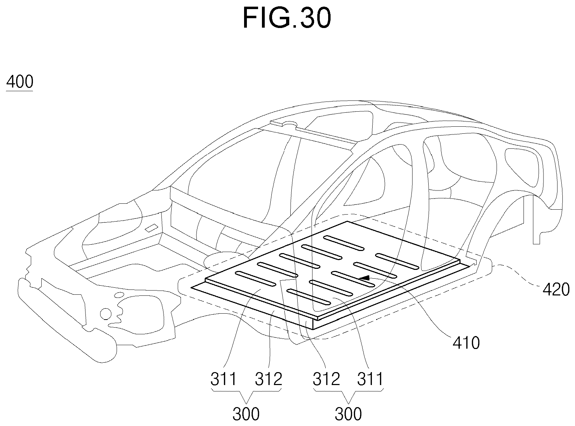

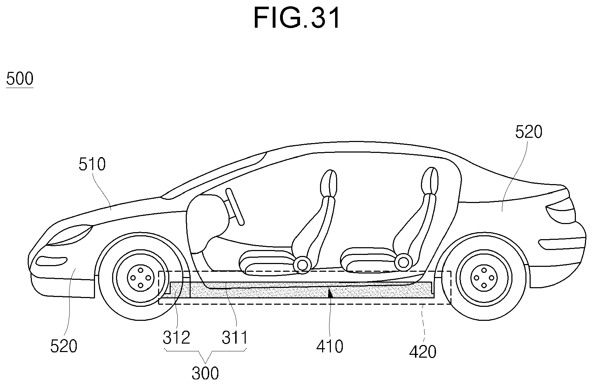

FIGS. 30 and 31 are perspective and side views showing vehicles 400 and 500 including the exemplary battery pack 300 according to the present disclosure. In FIG. 30, a battery pack 300 may include a battery pack cover 311 (may correspond to the first housing above), which is a part of a vehicle underbody 410, and a pack frame 312 (may correspond to the second housing above) disposed under the vehicle underbody 410. The pack frame 312 and the battery pack cover 311 may be integrally formed with a vehicle floor 420. The vehicle underbody 410 separates the inside and outside of a vehicle, and the pack frame 312 may be disposed outside the vehicle.

In FIG. 31, a vehicle 500 may be formed by combining additional parts, such as a hood 510 in front of the vehicle and fenders 520 respectively located in the front and rear of the vehicle to vehicle body parts 400. The vehicle 500 may further include a vehicle floor 420, which is one of the vehicle body parts 400 including the battery pack 300 including the pack frame 312 and the battery pack cover 311.

As is apparent from the above description, according to the present disclosure, a secondary battery may be provided such that an electrode assembly is not separated from a case (e.g., the electrode assembly falling out of the case) during a battery manufacturing process, and undesirable movement of the electrode assembly relative to the case after completion of the battery manufacturing process is also prevented.

However, aspects and features of the present disclosure are not limited to those described above, and other aspects and features not mentioned will be clearly understood by a person skilled in the art from the detailed description, described above.

Although the present disclosure has been described above with limited examples and drawings, the present disclosure is not limited thereto, and it is obvious that various modifications and variations may be made by those skilled in the art in the technical field to which the present disclosure belongs within the technical idea of the present disclosure.

The present disclosure additionally includes the following numbered embodiments:
1.A secondary battery comprising:
   a case comprising a sealing area provided along a periphery of the case;
   an electrode assembly accommodated in the case; and
   an adhesive member bonded to the case and the electrode assembly, wherein at least a portion of the adhesive member is coupled to the sealing area.
2. The secondary battery according to embodiment 1, wherein the case comprises:
   a first case covering one side of the electrode assembly; and
   a second case covering an opposite side of the electrode assembly, and
   wherein the sealing area comprises:
      a lateral sealing portion provided by sealing the first and second cases to each other in an area corresponding to a lateral side of the electrode assembly; and
      a front sealing portion provided by sealing the first and second cases to each other in an area corresponding to a front side of the electrode assembly.
   The secondary battery according to embodiment 2 may alternatively comprise a first case covering a first side of the electrode assembly, and a second case covering a second side of the electrode assembly.
3. The secondary battery according to embodiment 2, wherein at least a portion of the adhesive member is coupled to the lateral sealing portion.
4. The secondary battery according to embodiment 3, wherein at least a portion of the adhesive member extends outside the lateral side of the electrode assembly to be coupled to the lateral sealing portion. Preferably, at least a portion of the adhesive member extends outside the lateral side of the electrode assembly and is coupled to the lateral sealing portion.
5. The secondary battery according to embodiment 2, wherein the lateral sealing portion comprises two lateral sealing portions opposite each other with respect to the electrode assembly, and wherein the adhesive member extends to the two lateral sealing portions.
6. The secondary battery according to embodiment 2, wherein the lateral sealing portion comprises two lateral sealing portions opposite each other with respect to the electrode assembly, and
   wherein the adhesive member extends to one of the two lateral sealing portions.
7.The secondary battery according to embodiment 2, wherein a longitudinal width of the adhesive member is equal to or less than a longitudinal width of the electrode assembly.
8. The secondary battery according to embodiment 2, wherein a lateral width of a portion of the adhesive member coupled to the lateral sealing portion is equal to or less than a lateral width of the lateral sealing portion.
9. The secondary battery according to embodiment 2, wherein (at least) a portion of the adhesive member is coupled to the front sealing portion.
10. The secondary battery according to embodiment 9, wherein (at least) a portion of the adhesive member extends outside the front side of the electrode assembly to be coupled to the front sealing portion. Preferably, (at least) a portion of the adhesive member extends outside the front side of the electrode and is coupled to the front sealing portion.
11. The secondary battery according to embodiment 2, wherein the adhesive member extends from a center portion of the front side of the electrode assembly to the front sealing portion.
12. The secondary battery according to embodiment 2, wherein the adhesive member extends from two opposite side portions of the front side of the electrode assembly to the front sealing portion.
13. The secondary battery according to embodiment 2, wherein the adhesive member extends from a center and at least one side portion of the front side of the electrode assembly to the front sealing portion.
14. The secondary battery according to embodiment 2, wherein a lateral width of a portion of the adhesive member coupled to the front sealing portion is equal to or less than a lateral width of the front sealing portion.
15. The secondary battery according to embodiment 2, wherein the electrode assembly comprises:
   a first substrate tab extending through the front side;
   a first cell tab welded to the first substrate tab;
   a second substrate tab extending through the front side; and
   a second cell tab welded to the second substrate tab, and
   wherein the first cell tab and the second cell tab extend outside the case through the front sealing portion.
16. The secondary battery according to embodiment 15, wherein the adhesive member is coupled to a portion of the front sealing portion spaced apart from the first cell tab and the second cell tab.
17. The secondary battery according to embodiment 15, wherein a first insulating tape is interposed between the first cell tab and the front sealing portion,
   wherein a second insulating tape is interposed between the second cell tab and the front sealing portion, and
   wherein the adhesive member is spaced apart from the first insulating tape and the second insulating tape.
18. The secondary battery according to embodiment 15, wherein a first insulating tape is interposed between the first cell tab and the front sealing portion,
   wherein a second insulating tape is interposed between the second cell tab and the front sealing portion, and
   wherein the adhesive member overlaps the first insulating tape and the second insulating tape.
19. The secondary battery according to embodiment 2, wherein the lateral sealing portion comprises two lateral sealing portions opposite each other with respect to the electrode assembly, and
   wherein the adhesive member is coupled to the two lateral sealing portions and the front sealing portion.
20. The secondary battery according to embodiment 2, wherein a portion of the adhesive member extends outside the lateral side of the electrode assembly to be coupled to the lateral sealing portion, and
   wherein another portion of the adhesive member extends outside the front side of the electrode assembly to be coupled to the front sealing portion. Preferably, the portion of the adhesive member extends outside the lateral side of the electrode assembly and is coupled to the lateral sealing portion. Preferably, the another portion of the adhesive member extends outside the front side of the electrode assembly and is coupled to the front sealing portion.

## Claims

1. A secondary battery (100) comprising:
a case (110) comprising a sealing area (113) provided along a periphery of the case (110);
an electrode assembly (120) accommodated in the case (110); and
an adhesive member (140) bonded to the case (110) and the electrode assembly (120),
wherein at least a portion of the adhesive member (140) is coupled to the sealing area (113).

2. The secondary battery (100) as claimed in claim 1, wherein the case (110) comprises:
a first case (111) covering a first side of the electrode assembly (120); and
a second case (112) covering a second side of the electrode assembly (120), and
wherein the sealing area (113) comprises:
a lateral sealing portion (1131) provided where the first and second cases (111, 112) are sealed to each other in an area corresponding to a lateral side of the electrode assembly (120); and
a front sealing portion (1132) provided where the first and second cases (111, 112) are sealed to each other in an area corresponding to a front side of the electrode assembly (120).

3. The secondary battery (100) as claimed in claim 2, wherein at least a portion of the adhesive member (140)
is coupled to the lateral sealing portion (1131); or
extends beyond the lateral side of the electrode assembly (120) and is coupled to the lateral sealing portion (1131).

4. The secondary battery (100) as claimed in claim 2 or 3, wherein the lateral sealing portion (1131) comprises two lateral sealing portions that are opposite each other with respect to the electrode assembly (120), and
wherein the adhesive member (140) extends to the two lateral sealing portions or one of the two lateral sealing portions.

5. The secondary battery (100) as claimed in any one of claims 1 to 4, wherein a longitudinal width of the adhesive member (140) is equal to or less than a longitudinal width of the electrode assembly (120).

6. The secondary battery (100) as claimed in any one of claims 2 to 5, wherein a lateral width of a portion of the adhesive member (140) coupled to the lateral sealing portion (1131) is equal to or less than a lateral width of the lateral sealing portion (1131).

7. The secondary battery (100) as claimed in any one of claims 2 to 6, wherein a portion of the adhesive member (140) is coupled to the front sealing portion (1132).

8. The secondary battery (100) as claimed in any one of claims 2 to 7, wherein a portion of the adhesive member (140) extends beyond the front side of the electrode assembly (120) and is coupled to the front sealing portion (1132).

9. The secondary battery (100) as claimed in any one of claims 2 to 8, wherein the adhesive member (140) extends from
a center portion of the front side of the electrode assembly (120) to the front sealing portion (1132);
two opposite side portions of the front side of the electrode assembly (120) to the front sealing portion (1132); or
a center and at least one side portion of the front side of the electrode assembly (120) to the front sealing portion (1132).

10. The secondary battery (100) as claimed in any one of claims 2 to 9, wherein a lateral width of a portion of the adhesive member (140) coupled to the front sealing portion (1132) is equal to or less than a lateral width of the front sealing portion (1132).

11. The secondary battery (100) as claimed in any one of claims 2 to 10, wherein the electrode assembly (120) comprises:
a first substrate tab (1211) extending through the front side;
a first cell tab welded to the first substrate tab (1211);
a second substrate tab (1221) extending through the front side; and
a second cell tab welded to the second substrate tab (1221), and
wherein the first cell tab and the second cell tab extend through the front sealing portion (1132) to outside of the case (110).

12. The secondary battery (100) as claimed in claim 11, wherein the adhesive member (140) is coupled to a portion of the front sealing portion (1132) that is spaced apart from the first cell tab and the second cell tab.

13. The secondary battery (100) as claimed in claim 11 or 12, wherein a first insulating tape (1311) is interposed between the first cell tab and the front sealing portion (1132),
wherein a second insulating tape (1321) is interposed between the second cell tab and the front sealing portion (1132), and
wherein the adhesive member (140) is spaced apart from the first insulating tape (1311) and the second insulating tape (1321), or wherein the adhesive member (140) overlaps the first insulating tape (1311) and the second insulating tape (1321).

14. The secondary battery (100) as claimed in any one of claims 2 to 13, wherein the lateral sealing portion (1131) comprises two lateral sealing portions that are opposite to each other with respect to the electrode assembly (120), and
wherein the adhesive member (140) is coupled to the two lateral sealing portions and the front sealing portion (1132).

15. The secondary battery (100) as claimed in any one of claims 2 to 14, wherein a first portion of the adhesive member (140) extends to outside the lateral side of the electrode assembly (120) and is coupled to the lateral sealing portion (1131), and
wherein a second portion of the adhesive member (140) extends to outside the front side of the electrode assembly (120) and is coupled to the front sealing portion (1132).
